**Europäisches Patentamt**

**European Patent Office**

**Office européen des brevets**

(19)

(11) Veröffentlichungsnummer: **0 057 749**

**A1**

(12) **EUROPÄISCHE PATENTANMELDUNG**

(21) Anmeldenummer: **81108104.1**

(22) Anmeldetag: **09.10.81**

(51) Int. Cl.³: **F 24 J 3/02**

(30) Priorität: **11.02.81 DE 3104775**

(43) Veröffentlichungstag der Anmeldung:
**18.08.82 Patentblatt 82/33**

(84) Benannte Vertragsstaaten:
**AT BE CH FR GB IT LI NL SE**

(71) Anmelder: **Kabel- und Metallwerke Gutehoffnungshütte Aktiengesellschaft Kabelkamp 20 Postfach 260 D-3000 Hannover 1(DE)**

(72) Erfinder: **Ziemek, Gerhard, Dr. Bunzlauer Strasse 6 D-3012 Langenhagen(DE)**

(72) Erfinder: **Nordmeyer, Friedrich, Dr. Nietzschestrasse 11 D-4020 Mettmann 2(DE)**

(54) **Vorrichtung zur Nutzung von Umgebungsenergie zu Heizzwecken.**

(57) Bei einer Vorrichtung zur Nutzung von Umgebungsenergie mittels einer Wärmepumpenanlage besteht der der Umgebung ausgesetzte Wärmetauscher aus Metallblech (1), in welches mehrere in Längsrichtung des Metallblechs (1) verlaufende Kanäle (2) zur Führung des Arbeitsmediums integriert sind. Das Metallblech (1) ist unter Beibehaltung des Strömungsquerschnitts der Kanäle (2) in seiner Längsrichtung sternförmig oder in Form eines Mäanders gebogen.

Fig. 1a

EP 0 057 749 A1

-1-

K a b e l -   u n d   M e t a l l w e r k e
Gutehoffnungshütte Aktiengesellschaft

1-1796

10.02.81

Vorrichtung zur Nutzung von Umgebungsenergie zu Heizzwecken

Die Erfindung betrifft eine Vorrichtung zur Nutzung von Umgebungsenergie zu Heizzwecken mittels einer Wärmepumpenanlage, bei welcher in einem der Umgebung ausgesetzten Wärmetauscher das Arbeitsmedium durch die Umgebungsenergie erwärmt und ggf. verdampft wird und die dabei aufgenommene Energie durch den Wärmpumpenprozeß ausgenutzt wird.

Bei einer älteren Anmeldung (P 30 14 546.1 vom 16.04.80) besteht der Wärmetauscher aus mindestens zwei im wesentlichen horizontal angeordneten Platten aus Metallblech, die mehrere in Längsrichtung der Platten verlaufende Kanäle zur Führung des Arbeitsmediums aufweisen. Bei dieser Vorrichtung sind übereinandergelegene Kanäle durch Rohrstücke verbunden, die in aufwendiger Weise an die Enden der Kanäle angelötet werden müssen. Desgleichen ist bei dieser Konstruktion nachteilig, daß für die einzelnen Metallbleche eine gesonderte Haltekonstruktion notwendig ist.

0057749

Der Erfindung liegt von daher die Aufgabe zugrunde, eine Vorrichtung zur Nutzung von Umgebungsenergie anzugeben, die ohne großen Aufwand an Lötarbeiten herstellbar und selbsttragend ausgebildet ist. Darüber hinaus soll auf kleinstem Raum eine große Wärmetauscherfläche untergebracht werden.

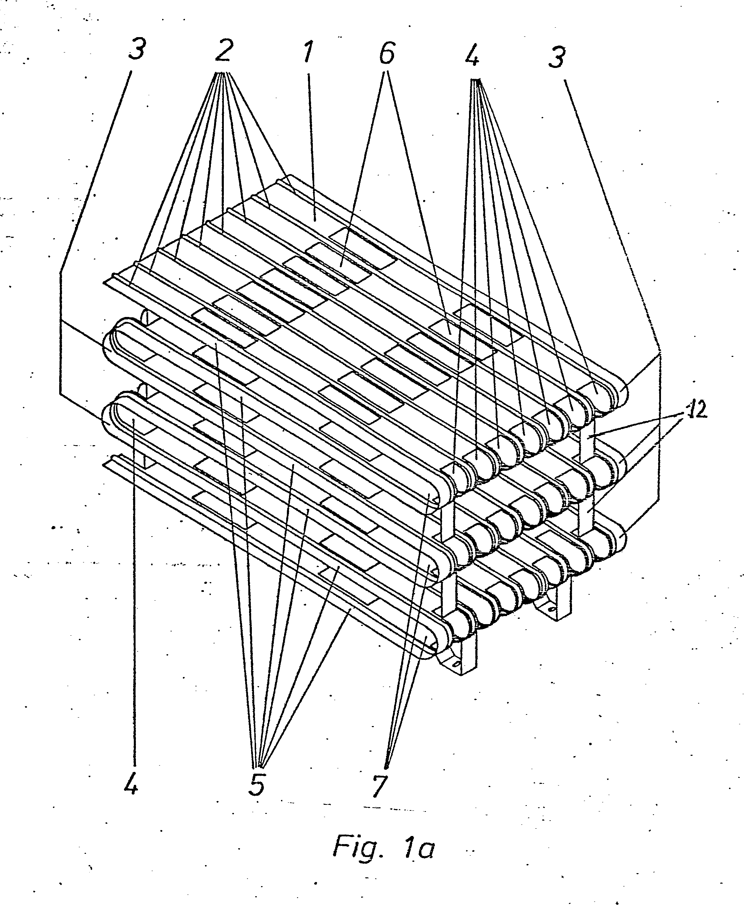

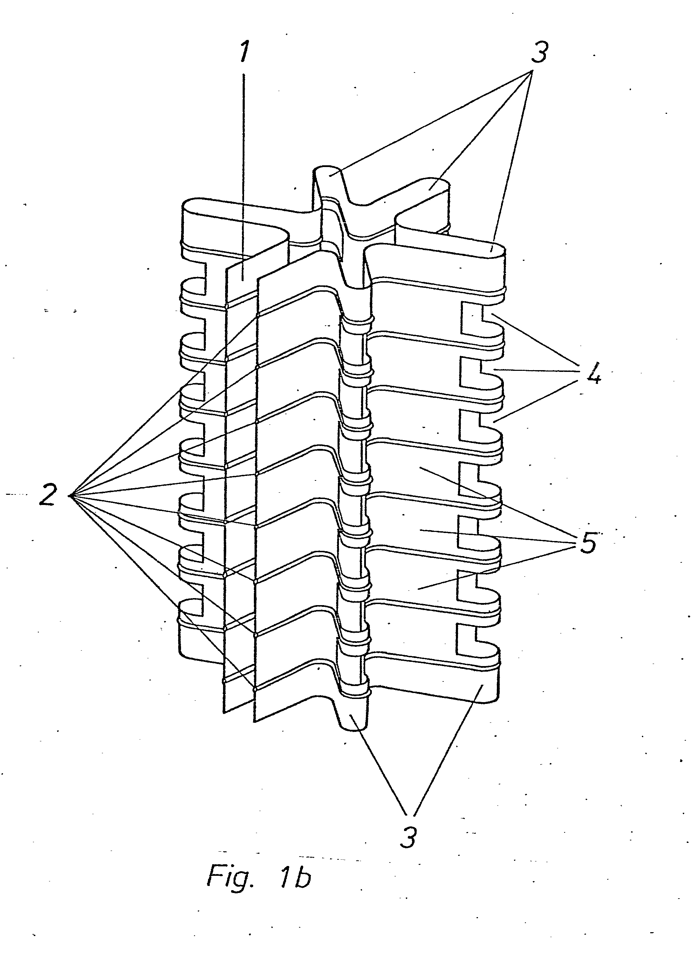

Diese Aufgabe wird bei einer Vorrichtung der eingangs erwähnten Art dadurch gelöst, daß der Wärmetauscher aus einem Metallblech besteht, in dem mehrere in Längsrichtung des Metallbleches verlaufende Kanäle zur Führung des Arbeitsmediums integriert sind und daß das Metallblech unter Beibehaltung des Strömungsquerschnitts der Kanäle in seiner Längsrichtung vorzugsweise in Form eines Mäanders gebogen ist. Nach einem weiteren Gedanken der Erfindung kann das Metallblech sternförmig gebogen sein (s. Fig. 1b). Mit besonderem Vorteil sind die zwischen den Kanälen und ggf. die neben den außen gelegenen Kanälen befindlichen Blechbereiche im Bereich der Biegungen entfernt. Durch diese Maßnahme wird einerseits das Biegen des Bleches erleichtert, zum anderen entsteht der Vorteil, daß bei einer horizontalen Anordnung der Metallbleche diese von allen Seiten gleichmäßig angeströmt werden können und somit die Wärmetauscherleistung nahezu unabhängig von der Windrichtung ist. Nach einem weiteren Gedanken der Erfindung sind jeweils zwei benachbarte Mäanderbögen durch aus der Ebene des Metallbleches herausgeklappte Blechstreifen mechanisch miteinander verbunden. Diese mechanische Verbindung kann beispielsweise durch Löten oder durch Nieten geschehen. Zweckmäßigerweise wird man die neben den außen gelegenen Kanälen befindlichen Randbereiche des Metallbleches so stanzen, daß eine Verbindung der so gebildeten Lasche mit dem Metallblech verbleibt, die senkrecht zur Richtung der Kanäle verläuft. Um diese Verbindungslinie wird die Lasche umgeklappt und mit dem Blechbereich der darunter oder darüber gelegenen Blechebene mechanisch fest verbunden. Der Abstand zweier benachbarter Mäanderschleifen

**0057749**

sollte mindestens 50 mm betragen. Diese Maßnahme ist notwendig, um ein Zuwachsen des zwischen zwei Mäanderschleifen gelegenen Zwischenraumes durch Vereisung bei Betrieb des Wärmetauschers im Bereich von $0^{o}$C zu vermeiden. Die ungekrümmten Bereiche des mäanderartig gebogenen Metallbleches sollten leicht geneigt zur Horizontalen verlaufen. Dadurch wird ein Abströmen der erkalteten Luftschichten bzw. erkalteten Wassers wesentlich erleichtert. Diese leichte Neigung erreicht man zweckmäßigerweise dadurch, daß die aus der Blechebene herausgeklappten Blechstreifen vertikal verlaufend die Mäanderbögen verbinden. Eine andere besonders günstige Möglichkeit, das Abfließen der erkalteten Luft- bzw. Wasserschichten zu erreichen, besteht darin, daß die zwischen zwei Mäanderbögen gelegenen im wesentlichen ebenen Bereiche des Metallbleches in Querrichtung zu den Kanälen gewölbt ausgebildet sind, und zwar sollten alle Lagen in der Mitte nach oben gewölbt sein.

Die Erfindung betrifft weiterhin ein Verfahren zur Herstellung des eingangs erwähnten Wärmetauschers. Das Biegen des Bleches, ohne daß die Kanäle abgeknickt oder wesentlich in ihrem Querschnitt verändert werden, wird zweckmäßigerweise dadurch erreicht, daß in die Kanäle eine Flüssigkeit, vorzugsweise Wasser, eingefüllt, die Flüssigkeit vorzugsweie im Biegebereich schockgefroren wird, das Metallblech vorzugsweise mäanderartig gebogen und die Flüssigkeit nach dem Biegen aus den Kanälen entfernt wird. Die in den Kanälen befindliche Eisschicht dient als Stütze während des Biegeprozesses und verhindert somit ein Zusammenquetschen der dünnwandigen Kanäle. Vor dem Biegen sollten an den Biegestellen die Blechbereiche zwischen den Kanälen und ggf. neben den außen gelegenen Kanälen ausgestanzt bzw. gestanzt werden. Dadurch wird der Biegevorgang wesentlich vereinfacht und wie bereits oben erwähnt, ein von allen Seiten gleichmäßig anströmbarer Wärmetauscher hergestellt. Als besonders vorteilhaft hat sich ein Verfahren erwiesen, bei dem bei einer vorbestimmten Länge mit Kanälen versehenen Metallbleches zunächst Wasser in die Kanäle gefüllt, die Kanäle endseitig verschlossen, in Abständen Blechbereiche zwischen den Kanälen sowie ggf. im Randbereich herausgestanzt bzw. gestanzt werden, daß das Wasser in den Kanälen zumindest in dem zu biegenden Bereich zum Erstarren gebracht wird, daß das Metallblech vorzugsweise mäanderförmig gebogen und anschließend das Wasser aus den Kanälen entfernt wird. Dieses Verfahren gestattet ein taktweises Herstellen gebrauchsfertiger Wärmetauscher, die lediglich an die Wärmepumpe angeschlossen werden müssen.

Der erfindungsgemäße Wärmetauscher ist sowohl für den Solebetrieb als auch für den Betrieb mit Kältemittel geeignet.

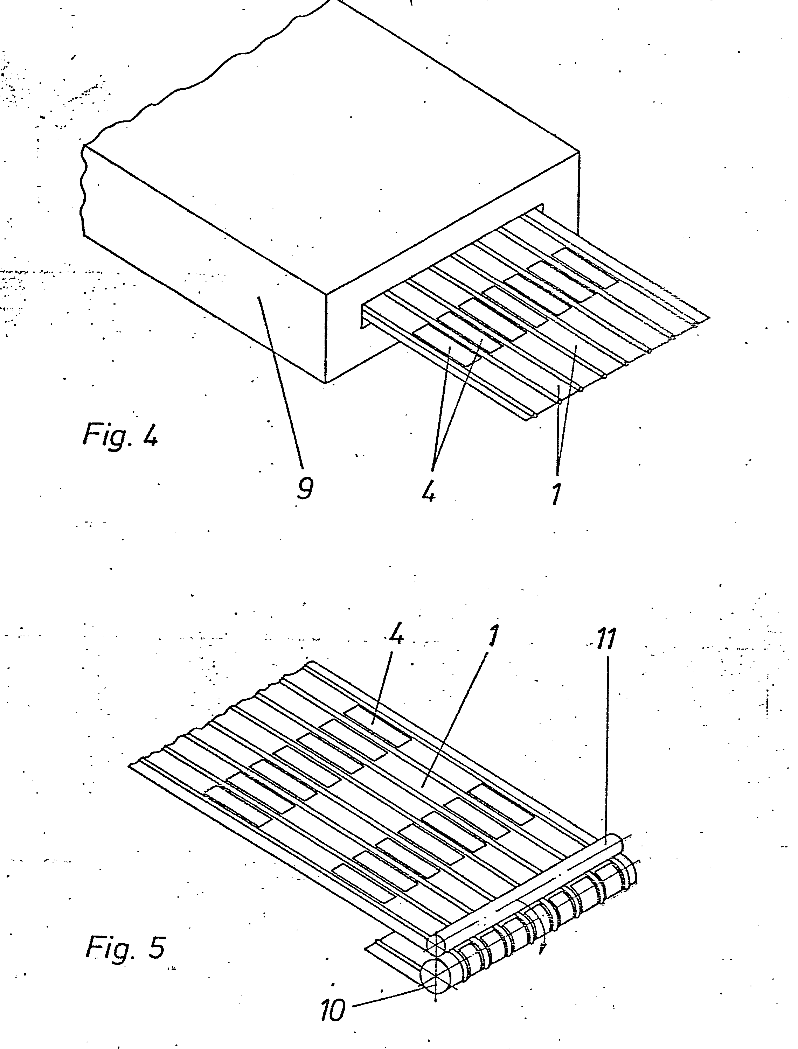

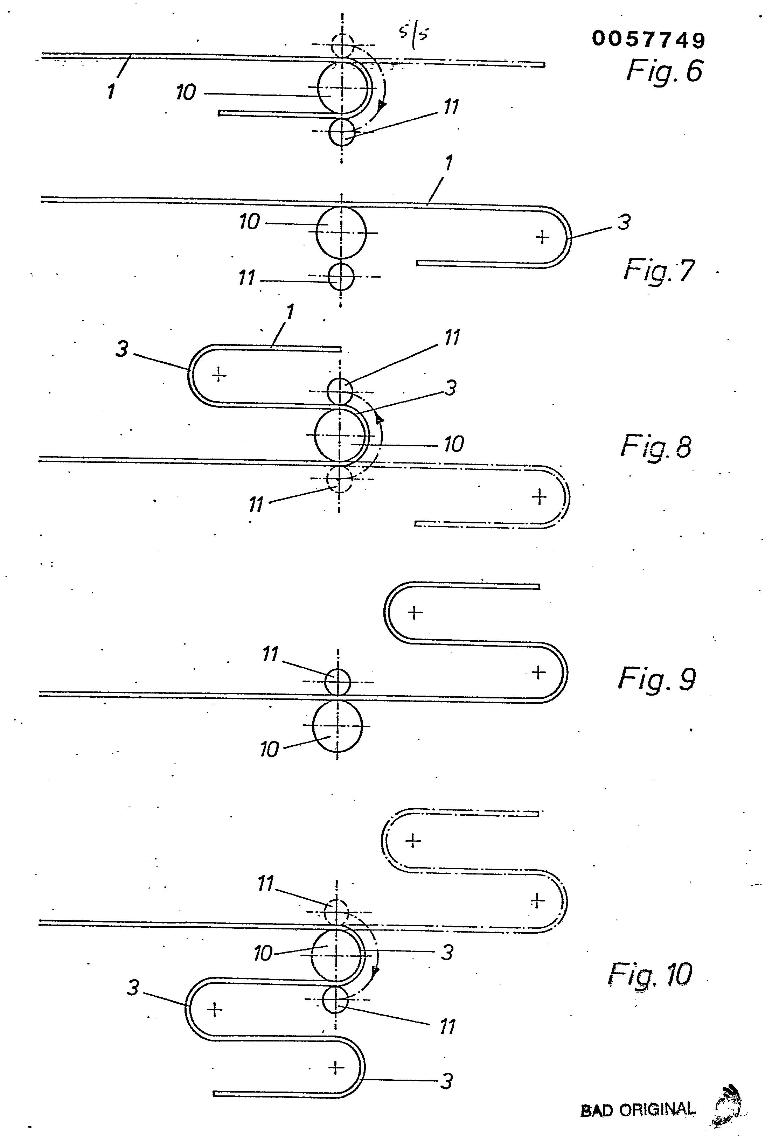

Die Erfindung ist anhand der in den Figuren 1 bis 10 schematisch dargestellten Ausführungsbeispiele näher erläutert.

In der Figur 1a ist ein Wärmetauscher dargestellt, welcher aus einem Kupferblech 1 von beispielsweise einer Wanddicke von 0,6 mm besteht, in welchem nach einem bestimmten Verfahren hergestellte Kanäle 2 integriert sind. Das Kupferblech 1 ist nach Art eines Mäanders geformt, wodurch ein großflächiger Wärmetauscher auf engstem Raum entsteht. Im Bereich der Mäanderbögen 3 sind die zwischen den Kanälen 2 befindlichen Blechbereiche herausgestanzt (s. 4), so daß der Zwischenraum zwischen den Plattenbereichen 5 von der Umgebungsluft längsdurchströmt werden kann. Durch Ausschnitte 6 zwischen den Kanälen 2 im Plattenbereich 5 kann die Durchlüftung des Wärmetauschers noch verbessert werden. Mit besonderem Vorteil sind die Plattenbereiche 5 in nicht dargestellter Weise geneigt zur Horizontalen angeordnet, so daß die nach dem Wärmetausch abgekühlte Luft besser abströmen kann. Dem gleichen Zweck dient eine ebenfalls nicht dargestellte Variante, gemäß der die Plattenbereiche 5 quer zur Längsrichtung der Kanäle 2 gewölbt ausgebildet sind, und zwar so, daß die Wölbung nach oben zeigt. Damit der Wärmetauscher selbsttragend, d.h. ohne Traggestell gebaut werden kann, sind jeweils benachbarte Mäanderbögen 3 durch aus den Bereichen 4 ausgestanzte und ungebogene Blechstreifen 12 verbunden. Die freien Enden der vertikal verlaufenden Blechstreifen 12 sind an den benachbarten Plattenbereich 5 angenietet.

Figur 1b zeigt einen sternförmig mäanderartig gebogenen Wärmetauscher in Säulenbauweise für den entsprechendes wie zu dem in Figur 1a dargestellten Wärmetauscher gilt.

Der Abstand zwischen den Bereichen 5 sollte mindestens 50 mm betragen, da sonst zu befürchten ist, daß bei Außentemperaturen von ca. 0°C durch die auftretende Vereisung der Zwischenraum zwischen den Bereichen 5 durch Vereisung zuwächst.

Wird der Abstand zwischen den Plattenbereichen 5 wesentlich größer als 50 mm, zum Beispiel mindestens 150 mm gewählt, besteht die Möglichkeit, zwei oder drei mäanderartig geformte Wärmetauscher ineinanderzuschieben. Dadurch kann bei gleicher Tauscherfläche der Weg des Tauschermediums erheblich verkürzt werden. Zweckmäßigweise wird man für die Blechstreifen 12 die neben den außen gelegenen Kanälen 2 gelegenen Blechbereiche 7 verwenden, um die Längsanströmung des Wärmetauschers nicht durch die herumgeklappten Blechstreifen 12 zu behindern. Man erhält auf diese Weise ein in sich stabiles Wärmetauschergebilde, welches auf engstem Raum ein Maximum an Tauscherfläche unterbringt.

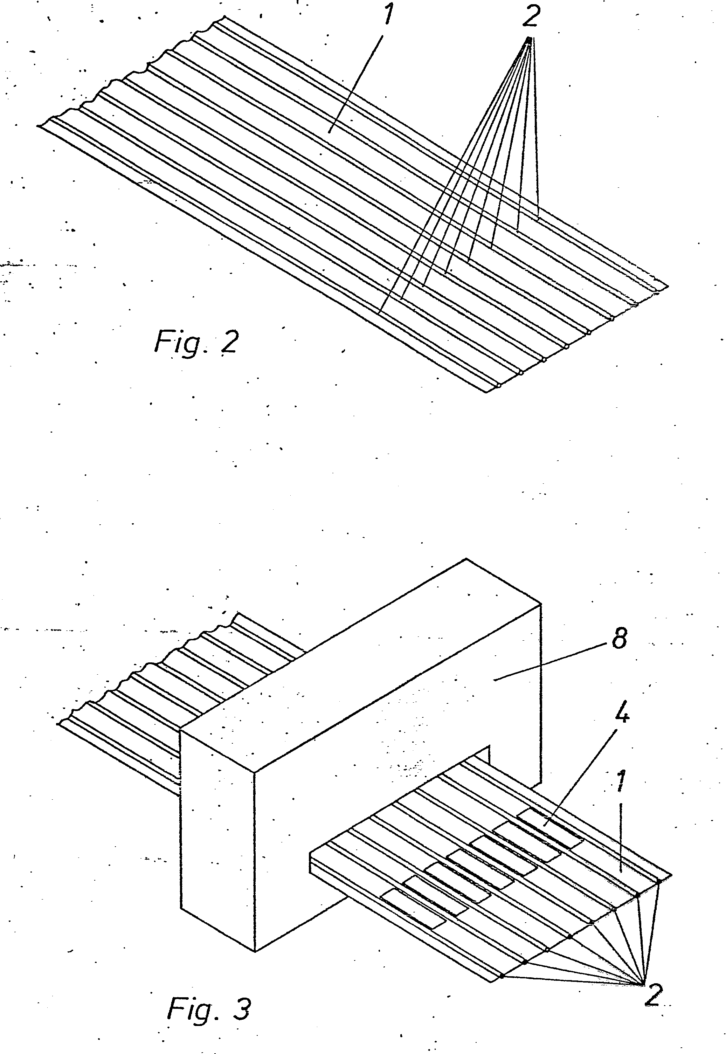

Das erfindungsgemäße Verfahren ist anhand der in den Figuren 2 bis 10 schematisch dargestellten Fertigungsstufen näher beschrieben.

Die Figur 2 zeigt ein Wärmetauscherblech 1 aus Kupfer, in welches eine Vielzahl von Kanälen 2 eingebracht ist. Das Kupferblech 1 hat vorzugsweise eine Wanddicke von 0,6 bis 0,8 mm. Aus dem Herstellungsverfahren für dieses Kupferblech 1 resultiert eine Wanddicke der Kanäle 2 von 0,3 bis 0,4 mm. Die Breite des Kupferbleches 1 beträgt zweckmäßigerweise in etwa 1.000 mm. Die Länge des Kupferbleches 1 richtet sich nach der benötigten Wärmetauscherfläche des Kompaktwärmetauschers. Für ein Einfamilienhaus von beispielsweise 120 qm zu beheizender Wohnfläche würde in etwa eine Tauscherfläche von 40 qm benötigt werden, so daß die Länge des Kupferblechs 1 40 m beträgt.

Das Kupferblech 1 wird zunächst einer Stanze 8 zugeführt, in der zumindest an den für den Mäanderbogen 3 vorgesehenen Stellen Ausstanzungen 4 im Kupferblech 1 erzeugt werden. Nach dem Stanzen gelangt das Kupferblech 1, dessen Kanäle 2 vor Beginn der Fertigung mit Wasser gefüllt und endseitig verschlossen wurden, beispielsweise mittels Stopfen, in eine Gefriereinrichtung 9, in welcher das in den Kanälen 2 befindliche Wasser zumindest dort zum Gefrieren gebracht wird, wo das Kupferblech 1 gebogen werden soll. Das Gefrieren des Wassers wird zweckmäßigerweise durch Besprühen der Bereiche des Kupferbleches 1 mit flüssiger Luft oder Stickstoff erzielt.

Das so vorbereitete Kupferblech gelangt in eine Biegevorrichtung, in welcher das Kupferblech 1 um annähernd 180$^{\circ}$ umgelenkt wird. Hierzu dienen zwei Rollen 10 und 11, von denen die Rolle 10 feststeht und die Rolle 11 das Kupferband 1 um die Rolle 10 herumführt. Während des Biegevorgangs stützt das in den Kanälen 2 befindliche gefrorene Wasser die Kanäle 2 von innen, so daß keine Querschnittsverringerung der Kanäle 2 auftritt.

Der Biegevorgang ist in der Figur 6 noch verdeutlicht. Zu Beginn des Biegevorgangs befindet sich die in ihrer Achse drehbar gelagerten Rolle 11 oberhalb der Rolle 10 und wird dann um die Rolle 10 gemeinsam mit dem Kupferblech 1 bewegt. Das Kupferblech 1 wird nun - siehe Figur 7 - weiterbewegt, bis die Rolle 10 in den Bereich des nächsten vorgesehenen Mäanderbogens gelangt. Die Rolle 10 oder das Kupferblech 1 werden nun so versetzt, daß die Rolle 10 oberhalb des Kupferbandes 1 angeordnet ist (Figur 8). Die Rolle 11 wandert nun wieder von der gestrichelt dargestellten in die ausgezogen dargestellte Position, dabei entsteht ein zweiter Mäanderbogen 3. Der geschilderte Verfahrensablauf wiederholt sich bis die gewünschte Anzahl an Mäanderbögen 3 in dem Kupferblech 1 erzeugt ist.

Kabel- und Metallwerke
Gutehoffnungshütte Aktiengesellschaft

1-1796
10.02.81

Patentansprüche

1. Vorrichtung zur Nutzung von Umgebungsenergie zu Heizzwecken mittels einer Wärmepumpenanlage, bei welcher in einem der Umgebung ausgesetzten Wärmetauscher das Arbeitsmedium durch die Umgebungsenergie erwärmt und ggf. verdampft wird und die dabei aufgenommene Energie durch den Wärmepumpenprozeß ausgenutzt wird, dadurch gekennzeichnet, daß der Wärmetauscher aus einem Metallblech (1) besteht, in dem mehrere in Längsrichtung des Metallblechs (1) verlaufende Kanäle (2) zur Führung des Arbeitsmediums integriert sind und daß das Metallblech (1) unter Beibehaltung des Strömungsquerschnittes der Kanäle (2) in seiner Längsrichtung vorzugsweise in Form eines Mäanders gebogen ist.

2. Vorrichtung nach Anspruch 1, dadurch gekennzeichnet, daß das Metallblech (1) sternförmig gebogen ist (s. Fig. 1b).

3. Vorrichtung nach Anspruch 1 oder 2, dadurch gekennzeichnet, daß die zwischen den Kanälen (2) und neben den außen gelegenen Kanälen (2) befindlichen Blechbereiche (4) im Bereich der Biegungen (3) entfernt sind.

4. Vorrichtung nach Anspruch 1 oder einem der folgenden, dadurch gekennzeichnet, daß jeweils zwei benachbarte Mäanderbögen (3) durch aus der Ebene des Metallbleches (1) herausgeklappte Blechstreifen (12) mechanisch miteinander verbunden sind.

5. Vorrichtung nach Anspruch 1 oder einem der folgenden, dadurch gekennzeichnet, daß der Abstand zweier benachbarter Mäanderschleifen (5) mindestens 50 mm beträgt.

6. Vorrichtung nach Anspruch 1 oder einem der folgenden, dadurch gekennzeichnet, daß die ungekrümmten Bereiche (5) des Metallblechs (1) leicht geneigt zur Horizontalen verlaufen.

7. Vorrichtung nach Anspruch 1 oder einem der folgenden, dadurch gekennzeichnet, daß die aus der Blechebene herausgeklappten Blechstreifen (12) vertikal verlaufend die Mäanderbögen (3) verbinden.

8. Vorrichtung nach Anspruch 1 oder einem der folgenden, dadurch gekennzeichnet, daß die zwischen zwei Mäanderbögen (3) gelegenen, im wesentlichen ebenen Bereiche (5) des Metallbleches (1) in Querrichtung zu den Kanälen (2) gewölbt ausgebildet sind.

9. Verfahren zur Herstellung eines Wärmetauschers nach Anspruch 1 oder einem der folgenden, dadurch gekennzeichnet, daß in die Kanäle eine Flüssigkeit, vorzugsweise Wasser eingefüllt, die Flüssigkeit vorzugsweise im Biegebereich Schockgefroren wird, das Metallblech vorzugsweise mäanderartig gebogen und die Flüssigkeit nach dem Biegen aus den Kanälen entfernt wird.

10. Verfahren nach Anspruch 8, dadurch gekennzeichnet, daß vor dem Biegen an den Biegestellen die Blechbereiche zwischen den Kanälen und ggf. neben den außen gelegenen Kanälen ausgestanzt bzw. gestanzt werden.

11. Verfahren nach Anspruch 9 oder 10, <u>dadurch gekenn-</u>
<u>zeichnet,</u> daß bei einer vorbestimmten Länge mit Kanälen
versehenen Metallbleches zunächst Wasser in die Kanäle
gefüllt, die Kanäle endseitig verschlossen, in Abständen Blechbereiche zwischen den Kanälen sowie ggf.
im Randbereich herausgestanzt werden, daß das Wasser
in den Kanälen zumindest in den zu biegenden Bereichen
zum Erstarren gebracht wird, daß das Metallblech vorzugsweise mäanderförmig gebogen und anschließend das
Wasser aus den Kanälen entfernt wird.

*Fig. 1a*

Fig. 1b

0057749

Fig. 2

Fig. 3

Fig. 4

9    4    1

Fig. 5

4    1    11

10

0057749

Fig. 6

Fig. 7

Fig. 8

Fig. 9

Fig. 10

**Europäisches Patentamt**

## EUROPÄISCHER RECHERCHENBERICHT

EP 81 10 8104.1

| EINSCHLÄGIGE DOKUMENTE | | | KLASSIFIKATION DER ANMELDUNG (Int. Cl.³) |
|---|---|---|---|
| **Kategorie** | Kennzeichnung des Dokuments mit Angabe, soweit erforderlich, der maßgeblichen Teile | betrifft Anspruch | |
| Y,A | DE – U1 – 8 010 379 (KABEL- UND METALL-WERKE GUTEHOFFNUNGSHÜTTE AG) <br> * ganzes Dokument * <br> -- | 1,5, 6 | F 24 J 3/02 |
| Y | DE – A1 – 2 709 301 (CIE EUROPEENNE DE MATERIEL THERMIQUE ET AERAULIQUE) <br> * Seite 12, Absatz 4; Fig. 4, 5 * <br> -- | 1 | |
| A | DE – A1 – 2 328 977 (R. & G. SCHMÖLE ME-TALLWERKE) <br> * Fig. 1, 3, 5, 7 * <br> -- | 3 | **RECHERCHIERTE SACHGEBIETE (Int. Cl.³)** |
| A | DE – A – 1 527 433 (F.X. STÖHR, AUTOGEN-U. ARMATURENWERK) <br> * ganzes Dokument * <br> ---- | 9,11 | B 21 D 9/00 <br> F 24 J 3/00 <br> F 25 B 39/00 <br> F 28 D 9/00 <br> F 28 F 3/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 15-04-1982 | KRABEL |

EPA form 1503.1   06.78